# EUROPEAN PATENT SPECIFICATION

(11) **EP 2 955 092 B1**
(45) Date of publication and mention of the grant of the patent: **02.05.2018**
(21) Application number: 13851906.1
(22) Date of filing: 29.10.2013
(51) Int. Cl.: B62H 3/02, B62H 5/00, B62M 6/80, B60L 11/18, H02J 7/00

(54) **SYSTEM FOR ATTACHING AND RECHARGING ELECTRIC BICYCLES FOR HIRE**
SYSTEM ZUR BEFESTIGUNG UND ZUM AUFLADEN ELEKTRISCHER FAHRRÄDER ZUM MIETEN
SYSTÈME D'ANCRAGE ET DE RECHARGE POUR BICYCLETTES ÉLECTRIQUES DE LOCATION

(30) Priority: 30.10.2012 ES 201201083
(43) Date of publication of application: 16.12.2015
(73) Proprietor: Bonopark, S.L., 28046 Madrid (ES)
(72) Inventor: VITAL HUICI, Miguel, 28046 Madrid (ES)
(74) Representative: Mediano Cortés, Santiago David
(86) International application number: PCT/ES2013/000240
(87) International publication number: WO 2014/068153

(56) References cited:
- EP-A1- 1 902 934
- EP-A1- 1 927 537
- ES-T3- 2 318 835
- FR-A1- 2 956 375
- FR-A1- 2 956 375
- GB-A- 2 455 551
- GB-A- 2 455 551
- JP-A- H1 075 535

## Description

### OBJECT OF THE INVENTION

The present invention relates to a system for attaching and recharging electric bicycles for hire, which are available to the public attached on a parking base so that by means of a suitable identification system the user can release the bicycle from the parking base and then, without any kind of identification, return it to that parking base in which it is attached, and the bicycle can be recharged through the attachment as it is an electric bicycle.

The object of the invention is to obtain a system for attaching that does not project from the bicycle frame, and another complementary attachment means or element established in the parking base.

### PRIOR ART

Both conventional and power assisted bicycles are available for hire in some cities today, such that at this point the present invention will only refer to power assisted bicycles for public or private use by anyone having identification at the time of releasing the bicycle from a parking base.

The bicycles are duly attached in that parking base to prevent them from being able to be released by anybody, there being attachments based on mechanical release elements by means of an electrical operation, as in the case described in invention patent ES2319030, where a pin emerging from the bicycle frame and having a side notch is inserted into a cavity or hole established to that end in the corresponding parking base, such that the bicycle can be locked in said parking base by means of an electromagnet.

There are other attachment means based on electromechanical elements, in which both attachment and release are performed by means of an electrical operation, as in the case described in patent document EP 1382519.

In other cases, attachment based on electromagnetic elements is achieved by means of magnetic force due to the application of electricity and release is achieved by means of interrupting the power supply, this solution being mentioned as the one disclosed in the description of patent document WO2006021650.

There are also attachments based on permanent electromagnetic elements, in which attachment is achieved by magnetic means and release is achieved by means of an electrical operation and as a result eliminating the magnetic field.

There are also systems for attaching which in turn allow recharging the battery of the bicycle, as described in patent document ES 2333635, where the pin emerging from the bicycle frame, housed in the cavity provided to that end in the parking base, incorporates electrical contacts fed by means of a cell for charging the battery of the bicycle itself.

In any case, most systems for attaching bicycles to the parking base are based on securing being done through one of the elements of the system for attaching to the portion of the bicycle frame, either to the front portion or to the middle portion of said frame, although the incorporation of the securing or attachment element in the bicycle has an ergonomic obstacle for the user at the time of parking the bicycle, because the user maneuvers the bicycle from the handlebar, fork and front wheel portion, so it is easier for the user to maneuver the attachment element secured to any of those portions of the bicycle.

The electrical connection systems for recharging the battery of the bicycle can be based on a connection independent from the attachment element, by means of an electric cable, such that in these cases the user must electrically connect the bicycle to the parking base and recharge the bicycle independently of the attachment of the bicycle.

The connection included in the attachment element, as in the case of the aforementioned invention patent 2333635, in which the electrical connection for recharging is done at the same time the bicycle is attached, such that the user does not have to perform any additional action so that the battery can be recharged when returning the bicycle itself, is also known.

Document GB 2455551 A is considered as the closest prior art and shows the following features of claim 1: A system for attaching and recharging electric bicycles for hire, comprising a parking base or post with attachment means for other complementary attachment means established in the corresponding bicycle, with the possibility of releasing the latter by means of a user activating an identification, wherein the attachment means provided in the parking base or post includes mechanical attachment means which consist of a moving part, a pair of springs and a linear single-effect electromagnet, where in it has been provided that the means for recharging the battery of the bicycle consists of male contactors in the attachment means provided to that end in the parking base or post and are suitable for complementary female contactors established to that end in the attachment means arranged on the bicycle.

### DISCLOSURE OF THE INVENTION

In the proposed system for attaching and recharging, the electric bicycle, being of the type which is attached on an attachment base and can be removed from the base by means of the corresponding identification, and having means which in turn attach the bicycle and recharge the battery thereof, has the particularity that the system for locking the bicycle with respect to the parking base or post, consists of the combination of a mechanical lock, an electromagnetic lock and data and electric current connectors, the management being centralized and synchronized in the network by means of an online platform, such that the database stores and synchronizes all the movements and useful data so that they are available for administrators and users at all times.

More specifically, the system for attaching and recharging of the invention includes attachment means established in the parking post or base, and attachment means established in the bicycle itself, such that the attachment means established in the corresponding parking base or post are of two types, a magnetic attachment and a mechanical attachment, the magnetic attachment being based on a permanent electromagnet, in which the magnetic field thereof is eliminated by means of applying electricity for releasing the bicycle, said permanent electromagnet furthermore acting as non-return locking means for the time of release, i.e., the residual magnetism is used as a non-return lock, in combination with positioners placed in the side and inner portions of the structure of the attachment corresponding to the parking base or post itself.

The mechanical attachment comprises a moving part, a pair of springs, a linear single-effect electromagnet and a ball bolt fastener, the balls acting as the actual fastener when they are inserted into or emerge from the bolt by means of operating a button, said bolt fastener having at its end a beveling to facilitate insertion into the corresponding part which the attachment of the bicycle has.

The actual attachment of the bicycle consists of a structure suitably fixed in the front portion, under the handlebar of the bicycle, with a magnetic securing part, a mechanical securing part, female contactors complementary to male contactors established in the attachment of the parking base or post, and a low-friction guide which is also complementary to a guide established to that end in the attachment provided in the parking base or post, said attachment of the bicycle being complemented with the corresponding parts and elements for fixing to the bicycle itself, as previously mentioned.

The system furthermore includes sensors provided in the attachment of the parking base or post, such that there is a magnetic sensor for checking that a metal part has been inserted into the corresponding attachment opening or cavity, there also being an end switch for checking the state of the ball bolt fastener and another end switch for checking the state of the locking electromagnet.

There have been provided as charging and communication elements four high-performance male connectors incorporating the attachment of the parking base or post, as well as the guide to facilitate positioning by the user and actual attachment of the bicycle to said parking post or base.

Based on these features, the system provides security against vandalism as it includes in the attachment the combination of a magnetic or permanent electromagnetic means and another mechanical means, logically in combination with sensors for checking the state of the fastener for greater security against possible errors and vandalism.

The fact that it is impossible to access the system for releasing the bicycle, i.e., the mechanical release, from outside the parking base or post when the bicycle is not attached thereto must also be highlighted.

Another advantage is that the incorporation of guides with low-friction materials on most of the attachment and recharging contact surface established both in the bicycle and in the parking base or post assure the ease of attachment and ergonomics in view of possible changes in the ground where the rental and recharge station or post is located; therefore the user will barely need to make any effort to return the bicycle.

Another important and advantageous novelty of the system of the invention is that the female portion of the attachment has been provided in the bicycle, whereas the male portion is in the parking base or post, being an integral part thereof, thereby preventing the risk of accidents derived from including projecting elements in the bicycle.

### DESCRIPTION OF THE DRAWINGS

To complement the description that will be made below and for the purpose of aiding to better understand the features of the invention according to a preferred practical embodiment thereof, a set of drawings is attached as an integral part of said description in which the following has been depicted with an illustrative and nonlimiting character:
Figure 1 shows a depiction corresponding to an exploded perspective view of a bicycle facing a parking post in a situation where said bicycle is attached to the post in question.
Figure 2 shows a perspective view of the attachment of the bicycle on the parking base or post.
Figure 3 shows a perspective view of the structure forming the attachment provided in the parking base or post.
Figure 4 shows an exploded view of the different portions participating in the attachment depicted in the preceding figure.

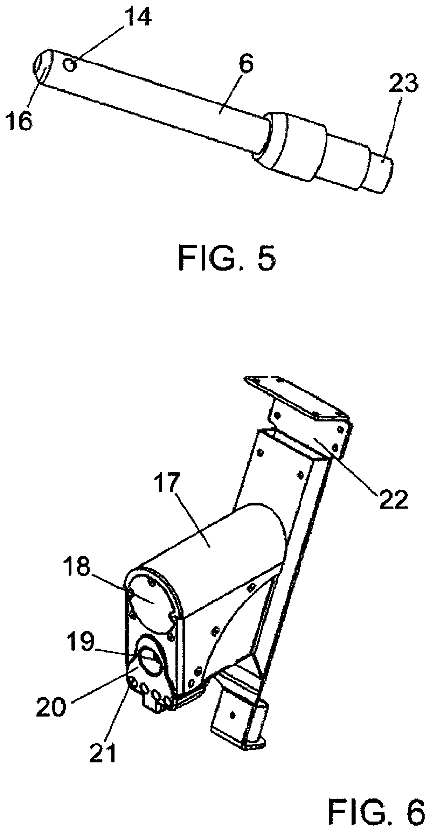

Figure 5 shows a perspective view of the ball bolt fastener participating in the attachment of the invention.
Figure 6 finally shows a perspective view of the attachment that is mounted on the bicycle and complementary to the attachment provided in the parking base or post.

### PREFERRED EMBODIMENT OF THE INVENTION

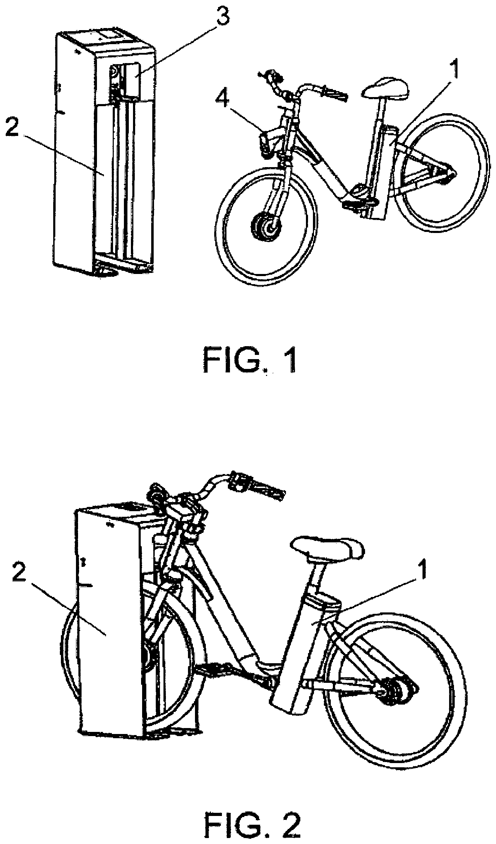

As can be seen in the mentioned drawings, the system for attaching and recharging of the invention is envisaged for use in electric bicycles (1) for hire attached to parking posts or bases (2), such that an attachment (3) for the bicycle (1) which is complementary to an attachment (4) provided to that end in the front portion of the bicycle, under the handlebar thereof, is included in this parking post or base (2), as depicted in Figure 1.

The attachment (3) provided on the parking post or base (2) includes a support structure (4) on which there are mounted a permanent electromagnet (5), a ball bolt fastener (6), side non-return elements (7), a low-friction guide (8) to facilitate positioning the bicycle (1) on the parking post or base (2), male contactors (9), specifically four in number, and a magnetic sensor (10), which will be described below with respect to the operation of the assembly.

The invention also comprises an end switch (12) for checking the state of the ball bolt fastener (6), an end switch (13) for checking the state of a single-effect electromagnet or locking electromagnet (14), and springs (15).

The permanent electromagnet is part of the magnetic attachment means corresponding to the parking base or post (1) and in combination with the side elements (7), they act as non-return locking elements when releasing the bicycle.

The ball bolt fastener (6) forming the mechanical attachment means provided on the parking post or base in turn includes balls (14) that retract into or emerge from \the bolt forming the fastener (6) by means of operating a button (23), that bolt or fastener (6) including at its front end a beveling (16) to facilitate insertion into the corresponding hole of the part to be secured to the attachment.

In turn, there is included in the attachment (4) provided on the bicycle a structure or support (22) for fixing same to the bicycle, and on which structure there is mounted a support (17) for a magnetic securing part (18) and for a mechanical securing part (19), these parts having the corresponding passage or hole for the pin of the fastener (6), in addition to having the low-friction guide (20) complementary to the guide (8) established in the attachment of the parking base or post, also including the female connectors (21) for charging and communication, and which are obviously complementary to the male connectors (9) provided on the structure of the attachment (3) corresponding to the parking post or base (2).

According to the mentioned features, when a bicycle is not parked, the corresponding attachment (3) of the parking base or post (2) will be in standby, such that the springs of the mechanical attachment push the moving part (11) and the latter in turn pushes the button (23) of the fastener (6) so that the balls (14) thereof are inserted or retracted into said fastener (6) and a bicycle (1) can be inserted for attachment thereof on the parking post or base at any time.

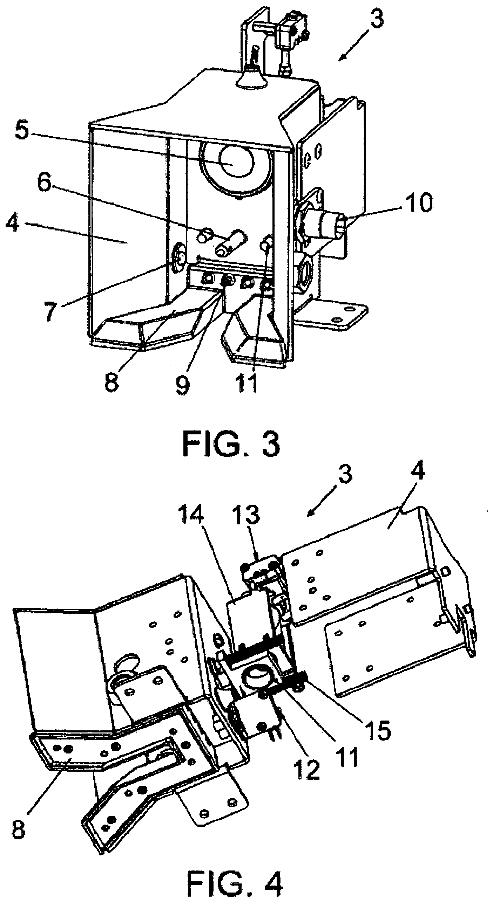

Once said operation of inserting the bicycle (1) in the parking base or post (2) has been performed, in element or attachment (4) of the bicycle (1) pushes the moving part (11) of the attachment corresponding to the parking base or post (2). When this movement occurs, the moving part (11) stops pushing the button (23) of the fastener (6) while at the same time is aligned with the hole said part (11) has to that end, i.e., a hole which is clearly shown in Figure 4 although it does not bear any reference number, said hole being aligned with the axis of the coil corresponding to the electromagnet (14), said axis of the coil being driven by the springs (15) for being inserted into the hole of the moving part (11) and the bicycle (1) thereby being attached to the parking base or post, wherein recharging of the battery of such bicycle (1) is also carried out.

The magnetic securing part or portion (17) of the attachment (4) of the bicycle (1) will be in contact with the permanent electromagnet (5), and the female contacts (21) of the attachment element (4) of the bicycle (1) will be inserted into the male contactors (9) of the attachment (3) corresponding to the parking base or post (2), all this such that when the user goes through the remote control system by means of their identification, such as a card, electricity is provided to the attachment (3) of the parking base or post (1), allowing the user to remove the bicycle, such that if said user does not interact within a specific time period the system again locks the bicycle, an operation which is allowed based on the already described non-return means provided in the attachment (3) of the parking base or post (2).

## Claims

1. A system for attaching and recharging electric bicycles for hire, comprising a parking base or post (2) with attachment means (3) for other complementary attachment means (4) established in the corresponding bicycle (1), with the possibility of releasing the latter by means of a user activating an identification, wherein the attachment means (3) provided in the parking base or post (2) includes a combination of magnetic attachment means and mechanical attachment means, the magnetic attachment means consisting of a permanent electromagnet (5), whereas the mechanical attachment means consist of a moving part (11), a pair of springs (15) and a linear single-effect electromagnet (14), in combination with a ball bolt fastener (6), it having been provided that the means for recharging the battery of the bicycle consist of male contactors (9) in the attachment (3) provided to that end in the parking base or post (2) and suitable for complementary female contactors (21) established to that end in the attachment means (4) arranged on the bicycle (1).

2. The system for attaching and recharging electric bicycles for hire according to claim 1, **characterized in that** the ball bolt fastener (6) includes balls (14) capable of retracting into or projecting out of the fastener (6) itself by operating a button (23) provided at one of the ends, whereas the other end of said fastener (6) has a beveling (16) to facilitate insertion thereof into a hole provided to that end in the moving part (11) of the attachment (3) established in the parking base or post.

3. The system for attaching and recharging electric bicycles for hire according to the preceding claims, **characterized in that** the permanent electromagnet (5), in combination with elements (7) provided on the sides of the structure (4) corresponding to the attachment (3) of the parking station or post (2), establishes non-return locking means in the corresponding operation of releasing the bicycle (1).

4. The system for attaching and recharging electric bicycles for hire according to the preceding claims, **characterized in that** the attachment (3) of the parking station or post (2) has a guide with low-friction materials (8), complementary to another guide (20) established to that end at the front of the attachment (4) provided on the bicycle (1), in order to facilitate comfortable positioning of the bicycle with respect to the parking post or base (2) by the user.

5. The system for attaching and recharging electric bicycles for hire according to the preceding claims, **characterized in that** the attachment (3) provided in the parking base or post (2) has an end switch (12) for checking the state of the fastener (6), as well as an end switch (13) for checking the state of the linear single-effect electromagnet (14) acting as a locking electromagnet in securing the bicycle (1) with respect to the parking post or base (2).

## Patentansprüche

1. System zur Befestigung und zum Aufladen elektrischer Fahrräder zum Mieten, umfassend eine Parkbasis oder -säule (2) mit Befestigungsmitteln (3) für andere komplementäre Befestigungsmittel (4), welche im entsprechenden Fahrrad (1) gebildet sind, mit Freisetzungsmöglichkeit der Letzteren indem ein Benutzer eine Identifizierung aktiviert, wobei die in der Parkbasis oder -säule (2) bereitgestellten Befestigungsmittel (3) eine Kombination von magnetischen Befestigungsmitteln und mechanischen Befestigungsmitteln einschließt, wobei die magnetischen Befestigungsmittel aus einem permanenten Elektromagnet (5) bestehen, während die mechanischen Befestigungsmittel aus einem beweglichen Teil (11), ein Paar Feder (15) und einen linearen einfachwirkenden Elektromagnet (14), in Kombination mit einem Kugelbolzenverschluss (6) bestehen, wobei es vorgesehen worden ist, dass die Mittel zum Aufladen der Batterie des Fahrrads aus Einsteck-Kontaktgebern (9) in der Befestigung (3) bestehen, welche dazu in der Parkbasis oder -säule (2) vorgesehen sind und für komplementäre Aufnahme-Kontaktgeber (21) geeignet sind, welche dazu in den auf dem Fahrrad (1) angeordneten Befestigungsmitteln (4) gebildet sind.

2. System zur Befestigung und zum Aufladen elektrischer Fahrräder zum Mieten nach Anspruch 1, **dadurch gekennzeichnet, dass** der Kugelbolzenverschluss (6) Kugeln (14) einschließt, welche in der Lage sind im Verschluss (6) selbst zurückgezogen zu werden oder daraus vorzuspringen, indem ein Knopf (23) betätigt wird, welcher an einem der Enden vorgesehen ist, während das andere Ende des genannten Verschlusses (6) eine Abschrägung (16) aufweist, um die Einführung desselben in ein Loch zu erleichtern, welches dazu im beweglichen Teil (11) der Befestigung (3) vorgesehen ist, welche in der Parkbasis oder -säule gebildet ist.

3. System zur Befestigung und zum Aufladen elektrischer Fahrräder zum Mieten nach den vorhergehenden Ansprüchen, **dadurch gekennzeichnet, dass** der permanente Elektromagnet (5), in Kombination mit Elementen (7), welche auf den Seiten der Struktur (4) entsprechend der Befestigung (3) der Parkstation oder -säule (2) vorgesehen sind, Rückschlag-Sicherungsmittel beim entsprechenden Freisetzungsvorgang des Fahrrads (1) bildet.

4. System zur Befestigung und zum Aufladen elektrischer Fahrräder zum Mieten nach den vorhergehenden Ansprüchen, **dadurch gekennzeichnet, dass** die Befestigung (3) der Parkstation oder -säule (2) eine Führung mit friktionsarmen Materialen (8) aufweist, komplementär zu einer anderen Führung (20), welche dazu auf der Vorderseite der auf dem Fahrrad (1) bereitgestellten Befestigung (4) gebildet ist, um eine bequeme Positionierung des Fahrrads in Bezug auf die Parksäule oder -basis (2) vonseiten des Benutzers zu erleichtern.

5. System zur Befestigung und zum Aufladen elektrischer Fahrräder zum Mieten nach den vorhergehenden Ansprüchen, **dadurch gekennzeichnet, dass** die in der Parkbasis oder -säule (2) bereitgestellten Befestigung (3) einen Endschalter (12) aufweist, zum Prüfen des Zustands des Verschlusses (6), sowie einen Endschalter (13) zum Prüfen des Zustands des linearen einfachwirkenden Elektromagnets (14), welcher als Sicherungselektromagnet bei der Sicherung des Fahrrads (1) in Bezug auf die Parksäule oder -basis (2) wirkt.

## Revendications

1. Système d'ancrage et de recharge pour bicyclettes électriques de location, comprenant une base ou borne de stationnement (2) avec des moyens d'ancrage (3) pour d'autres moyens d'ancrage complémentaires (4) prévus sur la bicyclette correspondante (1), avec la possibilité de déverrouiller cette dernière par le biais d'un utilisateur activant une identification, dans lequel les moyens d'ancrage (3) prévu sur la base ou borne de stationnement (2) comprennent une combinaison de moyens d'ancrage magnétique et des moyens d'ancrage mécanique, les moyens d'ancrage magnétique consistant en un électroaimant permanent (5), tandis que les moyens d'ancrage mécanique consistent en une pièce mobile (11), une paire de ressorts (15) et un électroaimant à effet unique linéaire (14), en combinaison avec une fixation à boulon à billes (6), en prévoyant que les moyens pour recharger la batterie de la bicyclette consistent en des contacteurs mâles (9) dans l'ancrage (3) prévu à cette fin dans la base ou borne de stationnement (2) et appropriés pour des contacteurs femelles complémentaires (21) prévus à cette fin dans les moyens d'ancrage (4) disposés sur la bicyclette (1).

2. Système d'ancrage et recharge pour bicyclettes électriques de location selon la revendication 1, **caractérisé en ce que** la fixation à boulon à billes (6) comprend des billes (14) aptes à s'escamoter ou à se projeter à l'extérieur de la fixation (6) elle-même en actionnant un bouton (23) prévu à l'une des extrémités, tandis que l'autre extrémité de ladite fixation (6) possède un chanfrein (16) pour faciliter son insertion dans un trou prévu à cette fin dans la pièce mobile (11) de l'ancrage (3) prévu sur la base ou borne de stationnement.

3. Système d'ancrage et recharge pour bicyclettes électriques de location selon les revendications précédentes, **caractérisé en ce que** l'électroaimant permanent (5), en combinaison avec les éléments (7) prévus sur les côtés de la structure (4) correspondant à l'ancrage (3) de la station ou borne de stationnement (2), établit des moyens de verrouillage anti-retour dans l'opération correspondante de déverrouillage de la bicyclette (1).

4. Système d'ancrage et recharge pour bicyclettes électriques de location selon les revendications précédentes, **caractérisé en ce que** l'ancrage (3) de la station ou borne de stationnement (2) possède un guide avec des matériaux à faibles frictions (8), complémentaire à un autre guide (20) prévu à cette fin à l'avant de l'ancrage (4) prévu sur la bicyclette (1) afin de faciliter un positionnement confortable de la bicyclette par rapport à la base ou borne de stationnement (2) de la part de l'utilisateur.

5. Système d'ancrage et recharge pour bicyclettes électriques de location selon les revendications précédentes, **caractérisé en ce que** l'ancrage (3) prévu sur la base ou borne de stationnement (2) possède un interrupteur d'extrémité (12) pour vérifier l'état de la fixation (6), ainsi qu'un interrupteur d'extrémité (13) pour vérifier l'état de l'électroaimant à effet unique linéaire (14) agissant en guise d'électroaimant de verrouillage pour la sécurisation de la bicyclette (1) par rapport à la borne ou base de stationnement (2).
